# EUROPEAN PATENT APPLICATION

(11) **EP 4 806 939 A1**
(43) Date of publication of application: **16.09.2026**
(21) Application number: 24863829.8
(22) Date of filing: 08.07.2024
(51) Int. Cl.: C08G 69/26, C08G 69/28

(54) **FLAME RETARDANT POLYAMIDE 56 AND PREPARATION METHOD THEREOF**

(30) Priority: 06.11.2023 KR 20230151695
(71) Applicant: LG Chem, Ltd., Seoul 07336 (KR)
(72) Inventor: CHON, Joonwoo, Daejeon 34122 (KR)
(74) Representative: Goddar, Heinz J.
(86) International application number: PCT/KR2024/009635
(87) International publication number: WO 2025/100678

(57) **Abstract**

Provided are a flame retardant polyamide 56 having superior flame retardant effect, and a preparation method thereof.

## Description

### [Technical Field]

### Cross-reference to Related Application

The present application is based on, and claims priority from, Korean Patent Application No. 10-2023-0151695, filed on November 6, 2023, the disclosure of which is hereby incorporated by reference herein in its entirety.

The present disclosure relates to a flame retardant polyamide 56 and a preparation method thereof.

### [Background Art]

Polyamide is a polymer of which main chain is composed of repeating amide bonds (-CO-NH-), and is also called nylon as another name. Among them, polyamide 56 is applied to the fields of textiles and engineering plastics due to its advantages such as superior moisture absorption, dyeability, melt flowability, etc. However, poor flame retardant property limits its application in the fields of building materials, electrical materials, and automobile materials.

Various methods have been proposed to impart flame retardancy to polyamide 56. Methods of blending with flame retardants, copolymerizing with flame retardants, and post-treating with flame retardants have been representatively proposed. The blending method has advantages of low cost and fast production speed, but has problems in the dispersibility and compatibility of flame retardants. The copolymerizing method has advantages of imparting flame retardancy while maintaining the properties of the polymer itself, but has a disadvantage of difficult application on an industrial scale. The post-treating method has an advantage of ease of processing, but has a disadvantage of reducing the effects of flame retardants themselves.

In general, flame retardant effects have been achieved by utilizing halogen-based substances. Recently, problems such as toxic gas emissions caused by halogen-based substances have been considered important. To solve this problem, environmentally friendly flame retardants are being developed, but they have still environmental problems.

The above problem may be solved by developing halogen-free flame retardants, and various materials are being studied. Among them, nitrogen-based flame retardants are widely applied in the form of melamine. The nitrogen-based flame retardants release non-combustible gases such as N₂, NH₃, CO₂, etc. when combusted, thereby diluting the concentration of O₂ and combustible gases generated in the combustion environment and exhibiting a flame retardant effect. At the same time, free radicals generated during polymer combustion and N₂ gas generated from the nitrogen-based flame retardants are reacted to prevent a chain reaction of combustion, thereby preventing additional combustion. However, the above method corresponds to a method of blending polyamide 56 with the halogen-free flame retardant, and thus there are still problems in the dispersibility and compatibility of the flame retardants, etc.

### [Disclosure]

### [Technical Problem]

Under the above background, there are provided a flame retardant polyamide 56 having superior flame retardant effect and a preparation method thereof.

### [Technical Solution]

To solve the above problem, provided is a flame retardant polyamide 56, in which at least one end group of polyamide 56 is end-capped with benzoguanamine.

As used herein, the term 'polyamide 56' refers to a polymer prepared by reacting 1,5-pentamethylenediamine and adipic acid. Specifically, it is a linear polymer including the following repeating units.

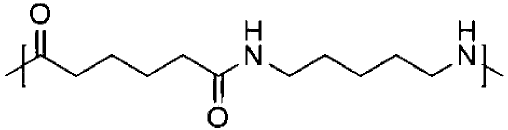

In order to impart flame retardancy to the polyamide 56, the present disclosure utilizes benzoguanamine, which is a diamine having a similar structure to melamine. In the prior art, polyamide 56 is blended with melamine or the like to impart flame retardancy thereto, but the present disclosure is characterized in that flame retardancy is imparted by end-capping at least one end group of polyamide 56 with benzoguanamine.

Since the benzoguanamine has two amine groups, it is able to react with the carboxyl group existing as the end group of polyamide 56, and as described later, it is possible to form a chemical bond with a polymer by reacting polyamide 56 with benzoguanamine after polymerization. Accordingly, the flame retardant polyamide 56 which is end-capped with benzoguanamine releases N₂, NH₃, CO₂, etc. by benzoguanamine when combusted, thereby diluting the concentration of O₂ and combustible gases generated in the combustion environment and exhibiting a flame retardant effect.

As used herein, the term 'flame retardant polyamide 56' may refer to a polymer composed only of polyamide 56 in which at least one end group of polyamide 56 is end-capped with benzoguanamine, and may also refer to polyamide 56 including the polymer as described above. In other words, the term 'flame retardant polyamide 56', as used herein, may refer to polyamide 56 in which at least one end group of polyamide 56 is end-capped with benzoguanamine, and a polymer including polyamide 56 that is not end-capped with benzoguanamine.

Preferably, a number average molecular weight of the polyamide 56 is 30,000 to 40,000. More preferably, the number average molecular weight of the polyamide 56 is 32,000 or more, 32,500 or more, or 33,000 or more. Further, a weight average molecular weight of the polyamide 56 is preferably 70,000 to 100,000. More preferably, the weight average molecular weight of the polyamide 56 is 75,000 or more, 76,000 or more, 77,000 or more, 78,000 or more, or 79,000 or more. In particular, when the weight average molecular weight of the polyamide 56 is 79,000 or more, it means that the content of polyamide 56 end-capped by benzoguanamine is high, and as a result, the flame retardant effect may be significantly improved.

Preferably, a molecular weight distribution (weight average molecular weight/number average molecular weight) of the polyamide 56 is 2.3 to 4.0. More preferably, the molecular weight distribution of the polyamide 56 is 2.35 or more, 2.36 or more, 2.37 or more, 2.38 or more, 2.39 or more, or 2.40 or more, 3.9 or less, 3.8 or less, 3.7 or less, 3.6 or less, or 3.5 or less.

As shown in Examples and Comparative Examples described below, the flame retardant polyamide 56 according to the present disclosure may have the remarkably improved flame retardancy, as compared to polyamide 56 that is not end-capped with benzoguanamine.

Further, there is provided a method of preparing the flame retardant polyamide 56, the method including the following steps of:
preparing a mixture including 1,5-pentamethylenediamine, adipic acid, and benzoguanamine (step 1); and
preparing polyamide 56 by reacting the mixture prepared in the step 1 (step 2).

In the step 1, a molar ratio of 1,5-pentamethylenediamine and adipic acid is preferably 1:0.8 to 1:1.2.

Preferably, benzoguanamine is used in an amount of 0.1% by weight to 30% by weight with respect to the total weight of 1,5-pentamethylenediamine and adipic acid. When the amount of use of benzoguanamine is less than 0.1% by weight, the flame retardancy improvement effect is poor, and when the amount of use of benzoguanamine is more than 30% by weight, the flame retardancy improvement effect does not substantially increase. More preferably, benzoguanamine is used in an amount of 0.5% by weight or more, 1.0% by weight or more, 2.0% by weight or more, 3.0% by weight or more, 4.0% by weight or more, 5.0% by weight or more, 6.0% by weight or more, 7.0% by weight or more, 8.0% by weight or more, 9.0% by weight or more, or 10% by weight or more; and 25% by weight or less, 20% by weight or less, 15% by weight or less, 14% by weight or less, 13% by weight or less, 12% by weight or less, 11% by weight or less, or 10% by weight or less with respect to the total weight of 1,5-pentamethylenediamine and adipic acid. In particular, when benzoguanamine is used in an amount of 3.0% by weight or more with respect to the total weight of 1,5-pentamethylenediamine and adipic acid, the content of polyamide 56 end-capped with benzoguanamine may be increased, and as a result, the flame retardant effect may be remarkably improved.

The step 2 is a method of preparing polyamide 56, which is a step of reacting 1,5-pentamethylenediamine with adipic acid to form an amide bond, thereby preparing a polymer, and at the same time, reacting with benzoguanamine.

Preferably, the reaction temperature of the step 2 is 250°C to 350°C.

Further, preferably, the reaction time of the step 2 is 0.5 hr to 4 hr.

Further, preferably, the reaction pressure of the step 2 is 15 bar to 25 bar.

Further, there is provided an article including the above-described flame retardant polyamide 56. Specifically, the article may be obtained from the flame retardant polyamide 56 through a processing process such as molding, etc. The article may include, but is not limited to, parts of automobiles, electrical and electronic devices, home appliances, office equipment, or household items.

### [Effect of the Invention]

As described above, polyamide 56 according to the present disclosure may have remarkably improved flame retardancy by being end-capped with benzoguanamine.

### [Detailed Description of the Embodiments]

Hereinafter, embodiments of the present invention will be described in more detail in the following Examples. However, the following Examples are only for illustrating the embodiments of the present invention, and the content of the present invention is not limited by the following Examples.

### Example 1

1,5-Pentamethylenediamine (PMDA; 411.5 g), adipic acid (AdA; 588.5 g), deionized water (1000 g), and benzoguanamine (BG; 30.0 g) were placed in a pressure reactor. The inside of the reactor was sufficiently replaced with nitrogen, and then stirred at 100 rpm and heated to 80°C. Then, water was evaporated while increasing the temperature to 200°C, and TSC of the internal solution was concentrated to 85%. After completing the concentration, the pressure was applied until it reached 20 bar, and the pressure was maintained at 20 bar for 1 hour until the temperature became 260°C. Thereafter, the pressure was depressurized to normal pressure for 1 hour, and when the depressurization was completed, the temperature was adjusted to 300°C. Thereafter, vacuum was maintained at 0.06 bar for 20 minutes. After the polymerization of the corresponding polymer, the melting resin was discharged at a pressure of 0.5 bar, cooled through a cooling tank, and then polymer pellets were produced through a pelletizer.

### Examples 2 to 4

Polymer pellets were produced in the same manner as in Example 1, except that the amount of use of benzoguanamine was changed as shown in Table 2 below.

### Comparative Example 1

Polymer pellets were produced in the same manner as in Example 1, except that benzoguanamine was not used.

### Comparative Examples 2 and 3

Polymer pellets were produced in the same manner as in Example 1, except that the amount of use of benzoguanamine was changed as shown in Table 2 below.

### Experimental Example

The following evaluations were conducted on the polymers produced in Examples and Comparative Examples.
1) Weight average molecular weight and Number average molecular weight (g/mol): determined by Agilent 1200 series and calibration with PC standards.
2) Flame retardancy: Flame retardancy was evaluated for specimens with a thickness of 1/16 inch according to the UL 94 measurement method as follows. First, after bringing the specimen into contact with a flame of 20 mm height for 10 seconds, the combustion time (t1) of the specimen was measured and the combustion pattern was recorded. Subsequently, when combustion was completed after the first flame contact, the specimen was brought into contact with a flame again for 10 seconds, and then the combustion time (t2) and the glowing time (t3) of the specimen were measured and the combustion pattern was recorded. This test was performed 5 times using specimens of the same size and then evaluated according to the criteria shown in Table 1 below.

**[Table 1]**

| Section | V-0 | V-1 | V-2 |
|---|---|---|---|
| Individual combustion time (t1 or t2 of individual specimen) | 10 sec or less | 30 sec or less | 30 sec or less |
| Total combustion time of 5 specimens (total of t1 and t2 of 5 specimens) | 50 sec or less | 250 sec or less | 250 sec or less |
| Combustion and glowing time after secondary flame contact (total of t2 and t3 of individual specimen) | 30 sec or less | 60 sec or less | 60 sec or less |
| Whether flaming particles are dropped | none | none | none |

The results are shown in Table 2 below.

**[Table 2]**

| | Amount of use of BG (g) | Weight ratio of BG | UL94 Grade | Number average molecular weight | Weight average molecular weight | Molecular weight distribution |
|---|---|---|---|---|---|---|
| Example 1 | 30.0 | 3 | V-1 | 33,000 | 79,200 | 2.40 |
| Example 2 | 50.0 | 5 | V-1 | 34,300 | 82,000 | 2.39 |
| Example 3 | 70.0 | 7 | V-0 | 35,000 | 87,500 | 2.50 |
| Example 4 | 100.0 | 10 | V-0 | 34,500 | 88,000 | 2.55 |
| Comparative Example 1 | 0 | 0 | V-2 | 31,200 | 71,700 | 2.30 |
| Comparative Example 2 | 1.0 | 0.1 | V-2 | 31,500 | 72,400 | 2.30 |
| Comparative Example 3 | 10.0 | 1 | V-2 | 32,000 | 75,200 | 2.35 |

As shown in Table 2, it was confirmed that the polymers of Examples according to the present disclosure had superior flame retardancy, as compared to those of Comparative Examples, indicating that the effect is due to the use of BG.

## Claims

1. A flame retardant polyamide 56, wherein at least one end group of the polyamide 56 is end-capped with benzoguanamine.

2. The flame retardant polyamide 56 of claim 1, wherein a number average molecular weight of the polyamide 56 is 30,000 to 40,000.

3. The flame retardant polyamide 56 of claim 1, wherein a weight average molecular weight of the polyamide 56 is 70,000 to 100,000.

4. The flame retardant polyamide 56 of claim 1, wherein a molecular weight distribution of the polyamide 56 is 2.3 to 4.0.

5. A method of preparing the flame retardant polyamide 56 of any one of claims 1 to 4, the method comprising the steps of:
preparing a mixture including 1,5-pentamethylenediamine, adipic acid, and benzoguanamine (step 1); and
preparing polyamide 56 by reacting the mixture prepared in the step 1 (step 2).

6. The method of claim 5, wherein in the step 1, a molar ratio of 1,5-pentamethylenediamine to adipic acid is 1:0.8 to 1:1.2.

7. The method of claim 5, wherein benzoguanamine is used in an amount of 0.1% by weight to 30% by weight with respect to a total weight of the 1,5-pentamethylenediamine and the adipic acid.

8. The method of claim 5, wherein a reaction temperature of the step 2 is 250°C to 350°C.

9. The method of claim 5, wherein a reaction time of the step 1 is 0.5 hr to 4 hr.

10. The method of claim 5, wherein a reaction pressure of the step 1 is 15 bar to 25 bar.
